# EUROPEAN PATENT APPLICATION

(11) **EP 2 001 209 A2**
(43) Date of publication of application: **10.12.2008**
(21) Application number: 08152846.5
(22) Date of filing: 17.03.2008
(51) Int. Cl.: H04M 1/24

(54) **Communication terminal apparatus and signal processing method thereof**

(30) Priority: 07.06.2007 KR 20070055675
(71) Applicant: Samsung Electronics Co., Ltd., Suwon-si, Gyeonggi-do 442-742 (KR)
(72) Inventor: Kim, Eog-kyu, Yeongtong-gu, Suwon-si, Gyeonggi-do (KR)
(74) Representative: Robinson, Ian Michael

(57) **Abstract**

Communication terminal apparatuses and methods can detect and/or adjust a signal characteristic. The communication terminal may include a controller (130) to compare a signal characteristic of a received test signal with a prescribed reference signal characteristic, and output a result of the comparison or adjust a signal characteristic for a subsequent signal. Accordingly, an abnormality in the signal characteristic, which may be caused by the displacement of a part occurring in the manufacturing and distributing process of the communication terminal apparatus, can be detected and/or adjusted.

## Description

### BACKGROUND OF THE INVENTION

### 1. Field of the Invention

The present general inventive concept relates to a communication terminal apparatus and a method thereof, and more particularly, to a communication terminal apparatus that detects and processes a signal characteristic, and a signal processing method thereof.

### 2. Description of the Related Art

In general, a communication terminal apparatus having a telephone function includes a wire/wireless telephone, a facsimile, and a mobile phone. Such a communication terminal apparatus performs a receiving function that receives and outputs voice signals transmitted from an opposite party, and a transmitting function that transmits a speech of a user.

Since the part serving to perform the receiving function, for example, a speaker is assembled with the communication terminal apparatus by a screw, a large deviation, which may be caused by the assembly condition, does not appear in receiving the signals. However, the part serving to perform the speech transmitting function, for example, a microphone is assembled using plastic or rubber, and this plastic or rubber may change in its location during the manufacturing or distributing process. Therefore, the microphone may be displaced in the manufacturing or distributing process, and thus, the microphone cannot properly serve its function of magnifying the user's voice, which makes it difficult to communicate with a receiving party.

In manufacturing the communication terminal apparatus, a manufacturer reflects a signal characteristic that is specific to a public switched telephone network (PSTN) of a country where the communication terminal apparatus is used because the signal characteristic of the PSTN differs from country to country. The signal characteristic includes an impedance characteristic and a frequency characteristic that are transmitted to the PSTN through a transmitter of a handset. The signal characteristic described above falls within a normal range when the communication terminal apparatus is manufactured, but there may be an abnormality in the signal characteristic caused by the displacement of the microphone during the manufacturing and distributing process. Accordingly, there is a problem that a user feels it inconvenient to communicate with the opposite party because of the abnormality in the signal characteristic. In this case, most of users do not notice that there is a disorder in the apparatus and bear the inconvenience caused by the deficiency in the communication quality.

Also, if the user becomes aware of the problem in the apparatus, the user has to re-assemble the communication terminal apparatus through an aftercare service, and thus, there is a problem of deteriorating the user's convenience in view of time and cost.

### SUMMARY OF THE INVENTION

The present general inventive concept provides a communication terminal apparatus capable of determining the presence/absence of an abnormality in the apparatus and a signal processing method thereof.

The present general inventive concept also provides a communication terminal apparatus that is capable of determining presence/absence of an abnormality in the apparatus by detecting a signal characteristic using a test signal, and a signal processing method thereof.

The present general inventive concept also provides a communication terminal apparatus that can determine the presence/absence of an abnormality in the apparatus and adjust a characteristic of a received signal, which may improve a user's convenience, and a signal processing method thereof.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept may be achieved by providing a communication terminal apparatusincluding a signal generator to generate a test signal, a signal receiver to receive the test signal and a controller to detect a signal characteristic of the test signal, compare the signal characteristic with a pre-stored reference signal characteristic and output a result of the comparison.

The communication terminal apparatus may further include a line unit to process a signal received through the signal receiver and to output the signal, and a switching unit to transmit the signal output from the line unit to a public switched telephone network (PSTN), and to feed the signal output from the line unit back to the controller during a test.

The communication terminal apparatus may further include an input unit to receive a test command, and the signal generator may generate the test signal if the test command is input.

The communication terminal apparatus may further include an adjusting unit to adjust a signal characteristic of the signal received at the signal receiver based on the result of a comparison output from the controller such that the adjusted signal characteristic matches the reference signal characteristic.

The signal characteristic may be signal levels that vary with an impedance characteristic or a frequency characteristic.

The communication terminal apparatus may include an input unit to receive a reference signal characteristic setting command and a storage unit to store the reference signal characteristic, and if the reference signal characteristic setting command is input, the controller may control the signal generator to generate the test signal, set the reference signal characteristic by applying a pre-set deviation range to the signal characteristic detected from the generated test signal, and store the reference signal characteristic in the storage unit.

The foregoing and/or other aspects and utilities of the present general inventive concept may also be achieved by providing a signal processing method of a communication terminal apparatus, the method to include generating a test signal, receiving the test signal through a signal receiver; and detecting a signal characteristic of the test signal, comparing the signal characteristic with a pre-stored reference signal characteristic, and outputting a result of the comparison.

The generating a test signal may include generating the test signal upon input of a test command.

The signal processing method may further include adjusting the signal characteristic of the signal received at the signal receiver based on the result of the comparison to match the adjusted signal characteristic to the reference signal characteristic.

The signal characteristic may be signal levels that vary with an impedance characteristic or a frequency characteristic.

The signal processing method may further include generating a first test signal to set a reference signal characteristic upon input of a reference signal characteristic setting command, and setting the reference signal characteristic by applying a pre-set deviation range to the signal characteristic detected from the generated test signal and storing the set reference signal characteristic as the pre-stored reference signal characteristic.

The foregoing and/or other aspects and utilities of the present general inventive concept may also be achieved by providing a communication terminal apparatus including a controller to compare a test signal characteristic with a reference signal characteristic and to output a result of the comparison.

The foregoing and/or other aspects and utilities of the present general inventive concept may also be achieved by providing a signal processing method of a communication terminal apparatus including receiving a test signal through a signal receiver and adjusting a signal characteristic of the received test signal based on a comparison with a pre-stored reference signal characteristic.

The foregoing and/or other aspects and utilities of the present general inventive concept may also be achieved by providing a computer readable medium having stored thereon instructions usable with a communication terminal apparatus including first instructions for generating a test signal, second instructions for receiving the test signal, third instructions for comparing a signal characteristic of the test signal with a pre-stored reference signal characteristic and fourth instructions for outputting a result of the comparison.

### BRIEF DESCRIPTION OF THE DRAWINGS

These and/or other aspects and utilities of the present general inventive concept will become apparent and more readily appreciated from the following description of embodiments of the present general inventive taken in conjunction with the accompanying drawings of which:
FIG. 1 is a block diagram illustrating a communication terminal apparatus according to an exemplary embodiment of the present general inventive concept;
FIG. 2 is a block diagram illustrating the communication terminal apparatus of FIG. 1;
FIG. 3 is a block diagram illustrating the line unit and the switching unit of FIG. 2;
FIGS. 4A and 4B are diagrams illustrating examples of a speaker mounted in the communication terminal apparatus;
FIGS. 5A and 5B are diagrams to represent examples illustrating adjusting a signal characteristic;
FIG. 6 is a flowchart illustrating a method of setting a reference signal characteristic of a communication terminal apparatus according to an exemplary embodiment of the present general inventive concept.
FIG. 7 is a flowchart illustrating a method of adjusting a signal of a communication terminal apparatus according to another exemplary embodiment of the present general inventive concept; and
FIG. 8 is a flowchart illustrating a method of adjusting a signal of a communication terminal apparatus according to another exemplary embodiment of the present general inventive concept.

### DETAILED DESCRIPTION OF EMBODIMENTS

Reference will now be made in detail to the exemplary embodiments of the present general inventive concept, examples of which are illustrated in the accompanying drawings, wherein like reference numerals refer to the like elements throughout. The exemplary embodiments are described below in order to explain the present general inventive concept by referring to the figures.

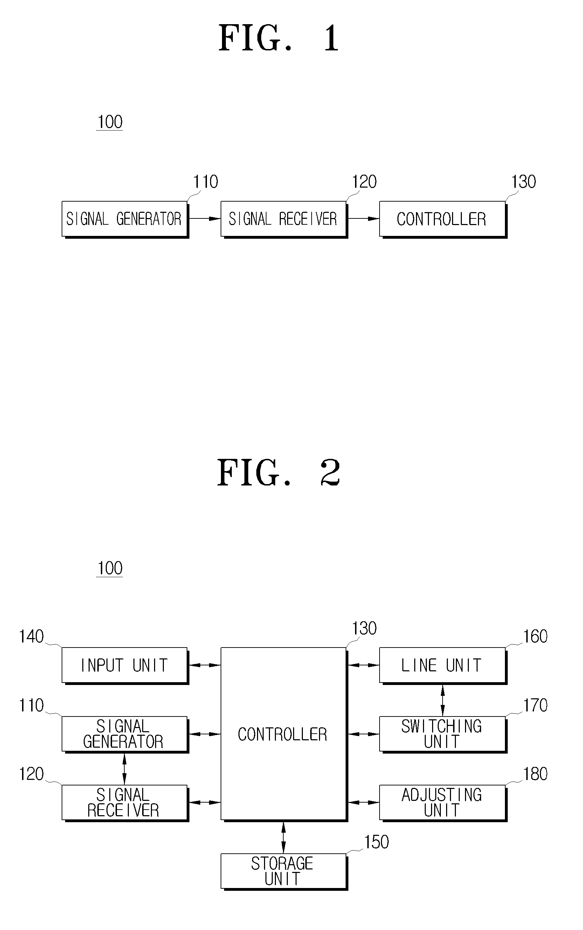

FIG. 1 is a block diagram illustrating a communication terminal apparatus according to an exemplary embodiment of the present general inventive concept. As illustrated in FIG. 1, a communication terminal apparatus 100 includes a signal generator 110, a signal receiver 120 and a controller 130.

The signal generator 110 may generate a test signal when a test to detect a signal characteristic is to begin. The signal generator 110 may generate, for example, either a test signal having a specific signal characteristic or a test signal having a signal characteristic that varies with a factor. The signal characteristic may be at least one of signal levels corresponding to an impedance characteristic and/or a frequency characteristic. The test signal may be an audio or sound signal. The signal generator 110 may be realized by a speaker.

The signal receiver 120 may receive the test signal generated by the signal generator 110. The signal receiver 120 may be a transmitter or microphone of the communication terminal apparatus 100.

The controller 130 may detect the signal characteristic of the test signal, compare the signal characteristic of the test signal with a pre-stored reference signal characteristic and output the result of the comparison. The controller 130 may output a matching signal if the signal characteristic of the test signal matches the reference signal characteristic. Also, the controller 130 may output a non-matching signal if the signal characteristic of the test signal does not match the reference signal characteristic. The reference signal characteristic preferably indicates a signal characteristic range that is suitable to a public switched telephone network (PSTN) of the country (area) where the communication terminal apparatus 100 is to be used. The controller 130 may provide a user with the matching signal or the non-matching signal, which is a result of detecting, in various ways. For example, the user may receive the result of detecting through a speaker, LCD, LED, or the like, of the communication terminal apparatus 100, which allows the user to easily perceiver its signal receiving condition.

If the signal characteristic of the test signal does not match the reference signal characteristic, it may be determined or sensed that there is a problem in receiving signals in the communication terminal apparatus 100.

FIG. 2 is a block diagram further illustrating exemplary features of the communication terminal apparatus 100 of FIG. 1. As illustrated in FIG. 2, the communication terminal apparatus 100 may include the signal generator 110, the signal receiver 120, the controller 130, an input unit 140, a storage unit 150, a line unit 160, a switching unit 170 and an adjusting unit 180. Description of the elements described above with reference to FIG. 1 will be omitted here.

The input unit 140 may receive or input a setting command signal to set a reference signal characteristic. Also, the input unit 140 may receive or input a test command signal to detect a signal characteristic. For example, the input unit 140 may receive signals through manipulation of function keys provided on an exterior of the communication terminal apparatus 100.

The signal generator 110 may gererate a test signal, for example, upon receiving a setting command or test command from the input unit 140.

The signal receiver 120 may receive the test signal generated by the signal generator 110. In one example, the test signal may be received through a transmitter of the communication terminal apparatus 100.

The line unit 160 may process the signal received at the signal receiver 120 and output the signal.

The switching unit 170 usually transmits the output signal of the line unit 160, for example, to a public switched telephone network (PSTN) or communication network (not illustrated), but if the test starts, the switching unit may feed the output signal of the line unit 160 back to the controller 130. For example, the switching unit 170 may be realized by a mechanical switch that includes at least two contact points and a switch lever, or a transistor switch such as a metal-oxide semiconductor field effect transistor (MOSFET). However, the present general inventive concept is not intended to be limited to such an exemplary disclosure. The switching unit 170 may be switched between a first switching condition to connect the line unit 160 with the PSTN and a second switching condition to feed the output of the line unit 160 back to the controller 130. Accordingly, if the communication terminal apparatus 100 is operated in a communication mode, the switching unit 170 is preferably operated in the first switching condition to transmit the output signal of the line unit 160 to the PSTN. Accordingly, the signal received by the transmitter of the communication terminal apparatus 100 is output to the PSTN to allow a communication with another party. The switching unit 170 may be provided as a separate element from the line unit 160 or may be included in a logic circuit of the line unit 160. An example of this will be described below.

If the communication terminal apparatus 100 is operated in a test mode according to the test command, the switching unit 170 is preferably operated in the second switching condition to feed the output signal of the line unit 160 back to the controller 140. In the test mode, the test signal is received through the signal receiver 120, and as a result, it is the test signal that the switching unit 170 transmits to the controller 130.

The controller 130 may control the entire operation of the communication terminal apparatus 100. For example, if a setting command is input through the input unit 140, the controller 130 may control the signal generator 110 to generate a test signal. If the test signal is received through the signal receiver 120, the controller 130 may detect a signal characteristic of the test signal. In this case, the test signal received through the signal receiver 129 may be a feedback signal that was transmitted through the line unit 160 and the switching unit 170. The signal characteristic may be any one of signal levels corresponding to an impedance characteristic and/or a frequency characteristic, or the like.

The controller 130 may set a reference signal characteristic. For example, the controller 130 may set a reference signal characteristic by applying a pre-set deviation range to the signal characteristic of the test signal and store the set reference signal characteristic in memory such as the storage unit 150. Setting a reference signal characteristic will be further described below.

If a test command is input through the input unit 140, the controller may control the signal generator 110 to generate a test signal. According to the test command, the controller 130 may control the switching unit 170 such that the output signal of the line unit 160 is fed back to the controller 130. Here, the test signal generated by the signal generator 110 is fed back to the controller 130 after passing through the line unit 160 and the switching unit 170.

The controller 130 preferably detects a signal characteristic of the feedback test signal, compares it with the reference signal characteristic (e.g., stored in the storage unit 150), and outputs a result of comparison. In an embodiment, the controller 130 may determine whether the signal characteristic of the test signal matches the reference signal characteristic. For example, if the test signal has a frequency of 300Hz, the controller 130 read outs a reference signal characteristic corresponding to 300Hz from the storage unit 150 and compares them. Then, the controller 130 determines whether the signal characteristic of the test signal matches the reference signal characteristic, and outputs a matching signal or a non-matching signal to the adjusting unit 180 (and/or a user).

The adjusting unit 180 may adjust the signal characteristic of the signal received through the signal receiver 120 based on the result of the comparison output from the controller 130. For example, if a non-matching signal is transmitted from the controller 130, the adjusting unit 180 adjusts the signal characteristic of the signal received through the signal receiver 120 to match the reference signal characteristic. To adjust the signal characteristic to match the reference signal characteristic, the adjusting unit 180 may amplify or attenuate the signal characteristic (e.g., the amplitude) of the received signal. For this, the adjusting unit 180 may be a semiconductor element programmed to an amplifying circuit and/or an attenuation circuit. If a matching signal is transmitted from the controller 130, no adjusting operation is preferably performed.

As described using exemplary embodiments above, if there is an abnormality in the signal characteristic caused by any displacement of a part of the communication terminal apparatus 100, a user can directly adjust the signal through the test.

As described using exemplary embodiments above, if a test command is input through the input unit 140, the communication terminal apparatus 100 of FIG. 2 may generate a test signal and perform a test operation. However, embodiments are not intended to be so limited, for example, such a test operation may be performed repeatedly, periodically, when external communications are not being performed, when the communication terminal apparatus 100 is turned on/off (e.g., without receiving a specific command), during manufacturing, or the like.

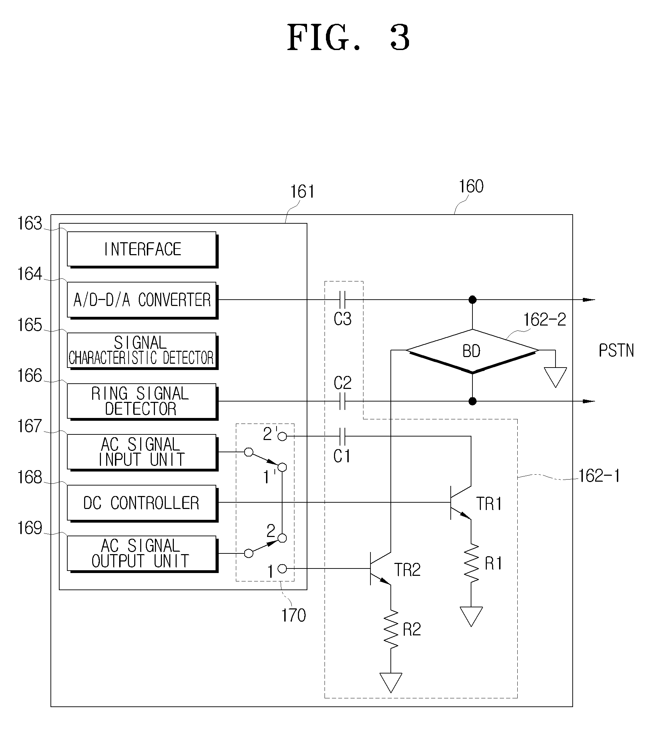

FIG. 3 is a block diagram illustrating exemplary features of the line unit and the circuit unit of FIG. 2. As illustrated in FIG. 3, the line unit 160 includes a line unit logic circuit 161, a connection unit 162-1, and a bridge diode unit 162-2.

The connection unit 162-1 may connect the line unit logic circuit 161 to a PSTN. The bridge diode unit 162-2 conducts a forward direction voltage at transistors TR1 and TR2 disposed at rear ends of the connection unit 162-1 even if a polarity of a switch board connected with the connection unit 162-1 is reversed. The first transistor TR1, a first resistor R1, and a direct current (DC) controller 168 of the connection unit 162-1 allow a constant DC to flow into the PSTN. Also, the second transistor TR2, a second resistor R2, and an alternating current (AC) signal output unit 169 amplify an output AC signal and transmit it to the PSTN.

The line unit logic circuit 161 may include an interface 163, A/D-D/A converter 164, a signal characteristic detector 165, a ring signal detector 166, a AC signal input unit 167, the DC controller 168, the AC signal output unit 169 and the switching unit 170.

The interface 163 communicates with the controller 130 to transmit and receive signals to and from the controller 130.

The A/D-D/A converter 164 can convert an AC signal received through the PSTN into a DC signal that can be processed by the communication terminal apparatus 100, or convert an DC signal received through the controller 130 into an AC signal and output the AC signal to the PSTN.

The ring signal detector 166 can detect a ring signal received through the PSTN.

In a general mode, the switching unit 170 can transmit the output signal of the line unit logic circuit 161 to the PSTN. For example, in a general mode, the switching unit 170 point-contacts with a terminal 1 and a terminal 2'. Accordingly, the signal received through the interface 163 may be output to the PSTN through the AC signal output unit 169 and the connection unit 162-1, whereas the signal received through the PSTN may be transmitted to the controller 130 through the AC signal input unit 167 and the interface 163.

If a test starts, the switching unit 170 may transmit the output signal of the line unit logic circuit 161, that is, a test signal, back to the controller 130. For example, in a test operating mode, switches of the switching unit 170 contact points at a terminal 2 and a terminal 1'. Accordingly, the test signal received through the interface 163 is fed back to the AC signal input unit 167 through a signal line bridging the terminal 2 and the terminal 1' of the switching unit 170, rather than being transmitted to the PSTN after passing through the AC signal output unit 169. Then, the test signal may be converted into an AC signal by the A/D-D/A converter 164 and transmitted to the controller 130 through the interface 163. In this case, the test signal is fed back to the controller 130 by the switching operation of the switching unit 170 when the test starts so that the signal characteristic can be processed (e.g., adjusted, detected, initially set or the like).

With the start of the test, the signal characteristic detector 165 may detect a signal characteristic of the test signal that has been fed back to the AC signal input unit 167 and received, compare it with the reference signal characteristic, and adjust the signal characteristic. For example, the line unit 160 may include the signal characteristic detector 165 to detect a signal abnormality occurring in the line unit 160 and adjust the signal characteristic. Operation of adjusting the signal characteristic of the signal characteristic detector 165 may be performed in a similar way to that of the controller 130 of FIGS. 1 and 2.

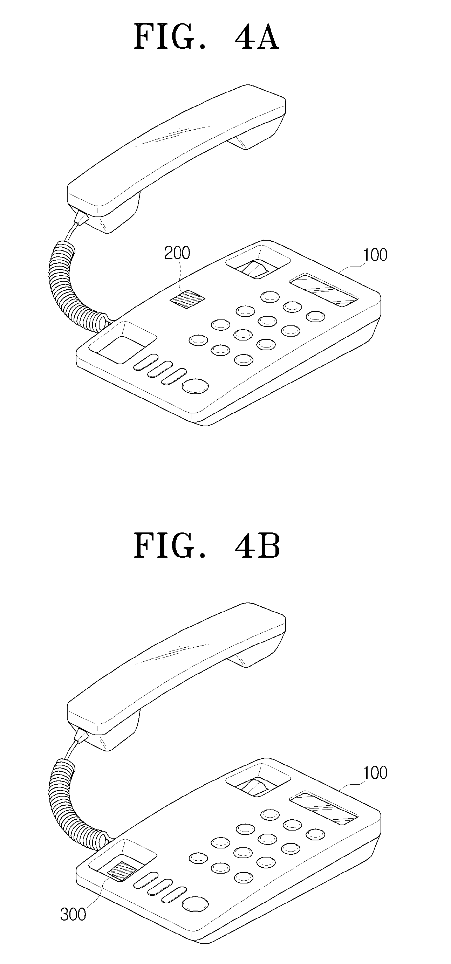

FIGS. 4A and 4B are diagrams illustrating examples of a speaker mounted in the communication terminal apparatus 100. As illustrated in FIG. 4A, a speaker 200 is mounted on a center where the handset of the communication terminal apparatus 100 is placed. The speaker 200 may correspond to the signal generator 110 of the communication terminal apparatus 100 and generate a test signal to the outside.

If a test signal is generated through the speaker 200 according to a test command, a user may bring the transmitter of the handset close to the speaker 200 to receive the test signal.

As illustrated in FIG. 4B, a speaker 300 is mounted on an area where the transmitter of the handset of the communication terminal apparatus 100 is placed. If a test signal is generated through the speaker 300 according to a test command, the transmitter of the handset preferably receives the test signal. As illustrated in FIG. 4B, if the speaker is mounted on the area corresponding to the transmitter, the transmitter may directly receive the test signal without requiring the user to manually adjust the location of the handset.

Generation of the test signal according to embodiments of the present general inventive concept are not intended to be limited to a speaker. Further, an exemplary speaker to generate a test signal is not limited to those shown in FIGS. 4A and 4B, and may be located on an exterior area of the communication terminal apparatus 100.

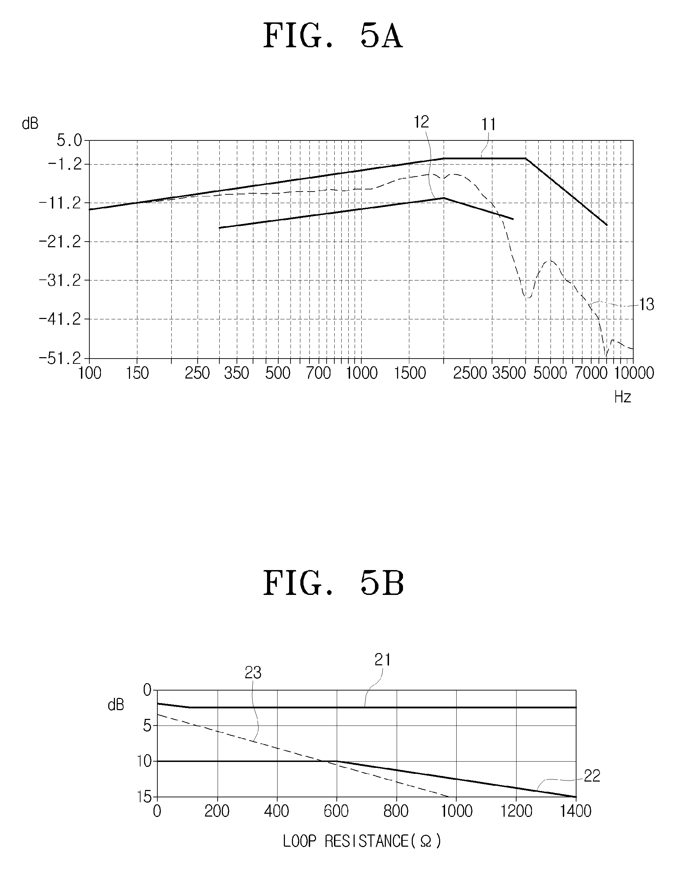

FIGS. 5A and 5B are diagrams illustrating examples of adjusting a signal characteristic. FIG. 5A is a diagram illustrating an example of adjusting a signal level according to a frequency. As illustrated in FIG. 5A, a first line 11 and a second line 12 represent a reference signal characteristic, e.g., a signal level that varies with the frequency. For example, the reference signal level at 300Hz ranges from -10dB to-16dB.

A third line 13 represents a signal level of a test signal that varies with the frequency. In this case, the signal level of the test signal at 300Hz is about -11 dB and accordingly matches the reference signal level. However, the signal level of the test signal at 3500Hz is about -21.2dB and accordingly does not match the reference signal level at the 3500Hz frequency. In this case, the communication terminal apparatus 100 may output a non-matching signal (e.g., by the controller 130) as a result of comparing the signal level of the test signal with the reference signal level. Accordingly, the amplitude of the signal having the frequency of 3500Hz is amplified (e.g., by the adjusting unit 180) and thereby the signal is adjusted to match the reference signal characteristic from -1 dB to -14dB at the corresponding frequency.

FIG. 5B is a diagram illustrating an example of adjusting a signal level according to impedance. As illustrated in FIG. 5B, a first line 21 and a second line 22 represent a reference signal characteristic, that is, a signal level that varies with the impedance. For example, the reference signal level at 400Ω ranges from 2dB to 10dB.

A third line 23 represents a signal level of a test signal that varies with the impedance. For example, the signal level of the test signal at 400 Ω is about 8dB and accordingly matches the reference signal level. However, the signal level of the test signal at 800 Ω is about 13dB and accordingly does not match the reference signal level at the impedance of 800 Ω. In this case, the controller 130 may output a non-matching signal as a result of comparing the signal level of the test signal with the reference signal level, and the adjusting unit 180 may attenuate the amplitude of the signal having the impedance of 800 Ω and thereby adjusts the signal to match the reference signal level of 2dB~12dB at the corresponding impedance.

As described with reference to examples illustrated in FIGS. 5A and 5B, the signal characteristic of the test signal received through the signal receiver 120 is detected, and the signal characteristic may be adjusted if it does not match the reference signal characteristic. Accordingly, the abnormality in the signal characteristic that may be caused by the displacement of the part such as the microphone located in the signal receiver 120 can be reduced or prevented.

The signal characteristic respectively illustrated in FIGS. 5A and 5B is merely an example, and of course, can be changed according to a prescribed characteristic, the characteristic of PSTN of country or area or the like.

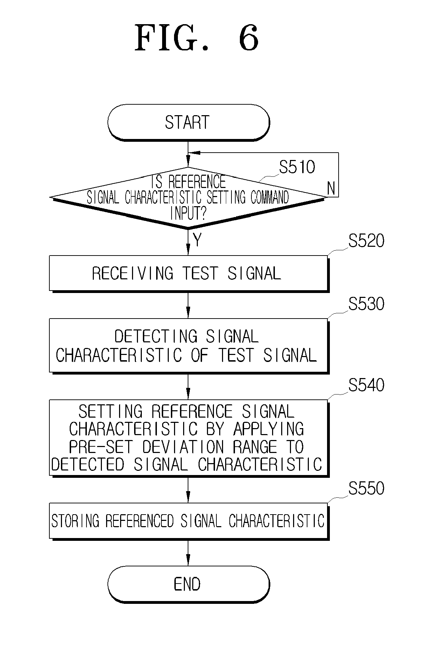

FIG. 6 is a flowchart illustrating a method for setting a reference signal characteristic of the communication terminal apparatus according to an exemplary embodiment. As illustrated in FIG. 6, if a setting command to set a reference signal characteristic is input at operation S510, the communication terminal apparatus 100 receives a test signal at operation S520. When the communication terminal apparatus 100 receives a command that is not the setting command to set a reference signal characteristic at operation S51 0, the method can wait for the next input command (e.g., control jumps back to operation S510). For example, the test signal may be output through an external speaker or a speaker provided on a body of the communication terminal apparatus 100. In another embodiment, the test signal may be received by the transmitter of the communication terminal apparatus 100.

The test signal used to set a reference signal characteristic may be generated at predetermined intervals and with different values. For example, a first test signal having a frequency of 300Hz is generated, and after a predetermined time lapses (for example, after 5 seconds), a second test signal having a frequency of 400Hz is generated. In this way, test signals may be generated by frequency. In this case, the communication terminal apparatus 100 receives the test signal that varies with the frequency, and detects the signal characteristic depending on the frequency.

Next, the communication terminal apparatus 100 detects a signal characteristic of the received test signal at operation S530, and sets a reference signal characteristic by determining a deviation range (e.g., applying a pre-set deviation range) to the detected signal characteristic at operation S540. For example, if the signal level of the test signal having the frequency of 300Hz is detected as -11 dB and if the signal level of the test signal having the frequency of 300Hz should fall within the range from -10dB to16dB, a reference signal characteristic may be set by applying the deviation range of +1 dB to -5dB to the signal level of the test signal.

After that, the communication terminal apparatus 100 stores the set reference signal characteristic to the storage unit at operation S550. Accordingly, the reference signal characteristic corresponding to the signal characteristic of the test signal can be stored.

Operation of setting a reference signal characteristic illustrated in FIG. 6 may be performed at the time of manufacturing the communication terminal apparatus 100, and thus the reference signal characteristic is set to be suitable for the signal characteristic of the country where the communication terminal apparatus 100 is to be used. Also, operations illustrated in FIG. 6 are not required to be performed in all of the communication terminal apparatuses 100. For example, the reference signal characteristic may be set for one communication terminal apparatus 100 and can be applied to another or remaining communication terminal apparatus 100.

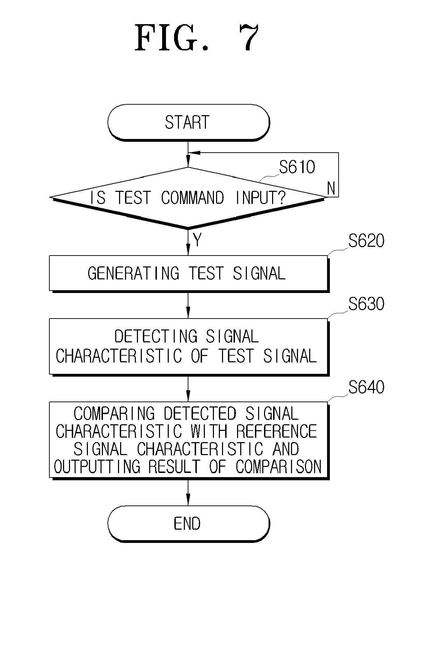

FIG. 7 is a flowchart illustrating a method of adjusting a signal of a communication terminal apparatus according to another exemplary embodiment of the present general inventive concept. As illustrated in FIG. 7, if a test command is input at operation S61 0, the communication terminal apparatus 100 generates a test signal at operation S620. In FIG. 7, the test signal may be a signal having a specific signal characteristic or a signal having a signal characteristic that varies with a certain factor.

The communication terminal apparatus 100 may detect a signal characteristic of the test signal at operation S630. The signal characteristic of the test signal may be a signal level corresponding to an impedance characteristic of the signal, a signal level corresponding to a frequency characteristic of the signal or the like.

At operation S640, the communication terminal apparatus 100 may compare the signal characteristic of the test signal with a reference signal characteristic and output the result of comparison. Here, the communication terminal apparatus 100 may determine whether there is a problem in receiving the signal by detecting the signal characteristic using the test signal.

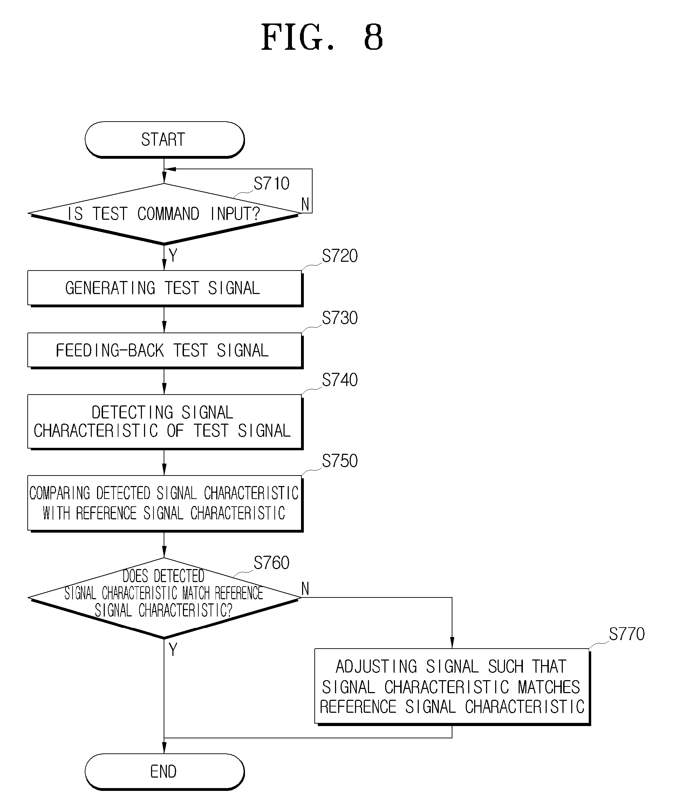

FIG. 8 is a flowchart illustrating a method of adjusting a signal of a communication terminal apparatus according to another exemplary embodiment of the present general inventive concept. As illustrated in FIG. 8, if a test command is input at operation S71 0, the communication terminal apparatus 100 generates a test signal operation S720. The test signal may be generated through a speaker mounted on the communication terminal apparatus 100. When no command or a command that is not the test command is received at operation S71 0, the method can wait for the next input command (e.g., control jumps back to operation S710).

At operation S730, the communication terminal apparatus 100 may feed the test signal back to itself. For example, in a communication mode, the communication terminal apparatus 100 outputs the signal received through the signal receiver 120, e.g., the transmitter to the PSTN. On the other hand, if a test command is input, the communication terminal apparatus 100 may control the switching operation and feed the received test signal back to itself.

After that, the communication terminal apparatus 100 may detect a signal characteristic of the test signal at operation S740. The communication terminal apparatus 100 compares the signal characteristic of the test signal with a reference signal characteristic, and outputs a result of comparison at operation S750. More specifically, the communication terminal apparatus 100 may determine whether the signal characteristic of the test signal matches the reference signal characteristic and output a matching signal or a non-matching signal. By performing this test operation, the communication terminal apparatus 100 may check whether there is a problem in receiving the signal.

When the detected signal characteristic does not match the reference signal characteristic as a result of comparing at operation S760, the communication terminal apparatus 100 adjusts or tries to adjust the signal characteristic to match the reference signal characteristic at operation S770. The communication terminal apparatus 100 preferably adjusts only a signal characteristic of an area in which the signal characteristic does not match the reference signal characteristic rather than adjusting the whole signal characteristic of the received signal.

Accordingly, the communication terminal apparatus 100 may operate such that the signal characteristic of the signal received at the communication terminal apparatus 100 matches or more closely matches the reference signal characteristic to improve a communication quality.

Also, if the signal characteristic does not match the reference signal characteristic despite of operation of embodiments of methods for adjusting the signal as described above, the communication terminal apparatus 100 may display a notice that there is an error in operating the communication terminal apparatus 100 or specifically identify the error to a user to improve the user's convenience.

The method embodiments of FIGS. 6, 7 and 8 were respectively described using and may be applied to the embodiment of FIGS. 1-2. However, such method embodiments or the present general inventive concept are not intended to be limited thereby.

As described above, according to exemplary embodiments of the present general inventive concept, it may be determined whether there is a problem in the communication terminal apparatus 100 by detecting the signal characteristic using the test signal. Further, according to exemplary embodiments of the present general inventive concept, results of such determinations may be provided to the user. Accordingly, the user can easily (e.g., directly or automatically) be aware of the presence/absence of disorder (e.g., microphone displacement) of the communication terminal apparatus 100.

Also, the user can adjust the signal characteristic of the received signal as a result of determining whether there is a problem in the communication terminal apparatus 100. According to exemplary embodiments of the present general inventive concept, such adjustments may be completely, partially or not successful and thus, the user's convenience can be improved in view of cost and time saving effect.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments. Furthermore, for ease of understanding, certain method procedures may have been delineated as separate procedures; however, these separately delineated procedures should not be construed as necessarily order dependent in their performance. That is, some procedures may be able to be performed in an alternative ordering, simultaneously, etc.

Although a few embodiments of the present general inventive concept have been illustrated and described, it will be appreciated by those skilled in the art that changes may be made in these embodiments without departing from the general inventive concept, the scope of which is defined in the appended claims. As used in this disclosure, the term "preferably" is non-exclusive and means "preferably, but not limited to." Terms in the claims should be given their broadest interpretation consistent with the general inventive concept as set forth in this description. For example, the terms "coupled" and "connect" (and derivations thereof) are used to connote both direct and indirect connections/couplings. As another example, "having" and "including", derivatives thereof and similar transitional terms or phrases are used synonymously with "comprising" (i.e., all are considered "open ended" terms) - only the phrases "consisting of" and "consisting essentially of" should be considered as "close ended".

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A communication terminal apparatus, comprising:
a signal generator (110) to generate a test signal;
a signal receiver (120) to receive the test signal; and
a controller (130) to detect a signal characteristic of the test signal, compare the signal characteristic with a pre-stored reference signal characteristic, and output a result of comparison.

2. The communication terminal apparatus as claimed in claim 1, further comprising:
a line unit (160) to process a signal received through the signal receiver (120) and to output the signal; and
a switching unit (170) to transmit the signal output from the line unit (160) to a public switched telephone network (PSTN), and to feed the signal output from the line unit (160) back to the controller (130) during a test.

3. The communication terminal apparatus as claimed in claim 1, further comprising an input unit (140) to receive a test command, wherein the signal generator (110) generates the test signal if the test command is input.

4. The communication terminal apparatus as claimed in claim 1, further comprising an adjusting unit (180) to adjust a signal characteristic of the signal received at the signal receiver (120) based on the result of the comparison output from the controller (130) such that the adjusted signal characteristic matches the reference signal characteristic.

5. The communication terminal apparatus as claimed in claim 1, wherein the signal characteristic is signal levels that vary with an impedance characteristic or a frequency characteristic.

6. The communication terminal apparatus as claimed in claim 2, further comprising:
an input unit (140) to receive a reference signal characteristic setting command; and
a storage unit (150) to store the reference signal characteristic,
wherein, if the reference signal characteristic setting command is input, the controller (130) controls the signal generator (110) to generate the test signal, sets the reference signal characteristic by applying a pre-set deviation range to the signal characteristic detected from the generated test signal, and stores the reference signal characteristic in the storage unit (150).

7. A signal processing method of a communication terminal apparatus, the method comprising:
generating a test signal;
receiving the test signal through a signal receiver (120); and
detecting a signal characteristic of the test signal, comparing the signal characteristic with a pre-stored reference signal characteristic, and outputting a result of the comparison.

8. The signal processing method as claimed in claim 7, wherein the generating a test signal comprises generating the test signal upon input of a test command.

9. The signal processing method as claimed in claim 7, further comprising adjusting the signal characteristic of the signal received at the signal receiver (120) based on the result of the comparison to match the adjusted signal characteristic to the reference signal characteristic.

10. The signal processing method as claimed in claim 7, wherein the signal characteristic is signal levels that vary with an impedance characteristic or a frequency characteristic.

11. The signal processing method as claimed in claim 7, further comprising:
generating a first test signal to set a reference signal characteristic upon input of a reference signal characteristic setting command; and
setting the reference signal characteristic by applying a pre-set deviation range to the signal characteristic detected from the generated test signal, and storing the set reference signal characteristic as the pre-stored reference signal characteristic.

12. A communication terminal apparatus, comprising:
a controller (130) to compare a test signal characteristic with a reference signal characteristic and to output a result of the comparison.

13. The communication terminal apparatus as claimed in claim 12, wherein the controller (130) is configured to transmit an error condition when the result of the comparison is that at least a portion of the test signal characteristic does not match the reference signal characteristic.

14. The communication terminal apparatus as claimed in claim 12, wherein the controller (130) is configured to adjust at least a portion of the test signal characteristic to match the reference signal characteristic when the result of the comparison is that the test signal characteristic does not match the reference signal characteristic.

15. The communication terminal apparatus as claimed in claim 14, wherein the controller (130) is configured to output an adjusted test signal characteristic to match the reference signal characteristic when the result of the comparison is that the test signal characteristic does not match the reference signal characteristic or to output an alert when the adjusted test signal characteristic does not match the reference signal characteristic.

16. The communication terminal apparatus as claimed in claim 14, comprising an adjusting unit (180) to determine the adjustment to the adjusted test signal characteristic to apply to subsequent signals output from the communication terminal apparatus.

17. The communication terminal apparatus as claimed in claim 12, wherein the signal characteristic varies with an impedance characteristic or a frequency characteristic,

18. The communication terminal apparatus as claimed in claim 17, wherein the signal characteristic is a signal level range that varies with an impedance characteristic or a frequency characteristic.

19. The communication terminal apparatus as claimed in claim 17, wherein the reference signal characteristic is a signal level range that varies with an impedance characteristic or a frequency characteristic, wherein the reference signal characteristic is predetermined or prestored, and wherein the reference signal characteristic varies by location or country.

20. The communication terminal apparatus as claimed in claim 12, wherein the test signal characteristic or the reference signal characteristic is determined at a time of manufacturing, assembly, registration, periodically, aperiodically, upon receipt of a command, based on user input or based on conditions at the communication terminal apparatus.

21. The communication terminal apparatus as claimed in claim 12, comprising:
a signal receiver (120) to receive signals including the test signal;
a line unit (160) to process the signals received through the signal receiver (120) and output the signals; and
a switching unit (170) to transmit the test signal output from the line unit (160) back to the controller (130) and to transmit the remaining signals output from the line unit (160) to a receiving terminal.

22. The communication terminal apparatus as claimed in claim 21, wherein the switching unit (170) is configured to transmit the remaining signals output from the line unit (160) to a public switched telephone network (PSTN) or communication network.

23. The communication terminal apparatus as claimed in claim 21, comprising:
an input unit (140) to receive a test command; and
a signal generator (110) to generate the test signal upon receipt of the test command.

24. The communication terminal apparatus as claimed in claim 23, wherein the input unit (140) is configured to receive a reference signal characteristic setting command, further comprising:
a storage unit (150) to store the reference signal characteristic,
wherein upon receipt of the reference signal characteristic setting command, the signal generator (110) is configured to generate the test signal and the controller (130) is configured to generate the reference signal characteristic by applying a pre-set deviation range to the signal characteristic detected from the generated test signal and store the reference signal characteristic in the storage unit (150).

25. The communication terminal apparatus as claimed in claim 12, wherein the test signal is a signal having a specific signal characteristic or a signal having a signal characteristic that varies with a prescribed factor.
